# EUROPEAN PATENT APPLICATION

(11) **EP 1 450 266 A1**
(43) Date of publication of application: **25.08.2004**
(21) Application number: 02802357.0
(22) Date of filing: 08.10.2002
(51) Int. Cl.: G06F 15/00, G06F 13/00, G06F 12/00

(54) **METHOD FOR CONDUCTING COLLABORATION BETWEEN COMPUTERS ON NETWORK, SYSTEM, AND COMPUTER PROGRAM**

(30) Priority: 30.10.2001 JP 2001332636
(71) Applicant: INTERNATIONAL BUSINESS MACHINES CORPORATION, Armonk, NY 10504 (US)
(72) Inventor: SAKAGUCHI, Akira, c/o Yamato site, Yamato-shi, Kanagawa 242-8502 (JP); YOSHIDA, Yoichi, c/o Yamato site, Yamato-shi, Kanagawa 242-8502 (JP); NAKAMURA, Kohichi, c/o Yamato site, Yamato-shi, Kanagawa 242-8502 (JP); KAWASE, Satoshi, c/o Yamato site, Yamato-shi, Kanagawa 242-8502 (JP)
(74) Representative: Watson, Justine Nicola C.
(86) International application number: PCT/JP2002/010455
(87) International publication number: WO 2003/038634

(57) **Abstract**

[Object]

It is one objective of the present invention to collaborate, between multiple clients, on arbitrary contents on a network.

[Constitution]

A collaboration system connected to the Internet includes a collaboration server and multiple clients. A redirect program is resident in a client and monitors a URL transition event, and if a URL transition event has occurred, the redirect program captures the URL transition event and permits a browser to cancel it. Thereafter, the URL is redirected to the collaboration server. In response to the URL transition event, the collaboration server obtains contents from a web server. Applets for synchronization is added to the obrained contents, and the resultant contents are then transmitted to the client. Since contents are constantly obtained through the collaboration server, client collaboration is implemented.

## Description

### [Technical Field]

The present invention generally relates to an information processing technique. More particularly, the present invention relates to a collaboration technique for synchronizing multiple client computers on a network.

### [Background]

Presently available are various collaboration systems which provide means for multiple persons to jointly and interactively perform tasks (collaboration) while concurrently browsing the same or mutually relevant contents. For example, a customer support system which provides means for customer and agent collaboration is presently available. An e-learning system which provides means for teacher and student collaboration is also available. Regarding such collaboration systems, there exists a common demand for more frexible and convinient collaboration on contents on a network (especially the Internet) by synchronizing multiple computers.

"Web Collaboration" provided by International Bussiness Machines Corporation is presently available as a program product that can cope with this demand. The collaboration system with the program product "Web Collaboration" provides for a collaboration server and multiple client computers that are connected to a network. The collaboration system employs the following method to synchronize the client computers.

At first, a collaboration between the multiple client computers is established. During the collaboration, the collaboration server acknowledges synchronization between the multiple client computers. Next, a URL transition event (URL shift event) occurs at one of the multiple computers. (The term "URL" is abbreviation for "Uniform Resource Locator" and represents an address at which a resource is located on a TCP/IP network.) The URL transition event indicates a URL in the domain of the collaboration server as a transition destination. Information of the URL of a web server from which the contents should be obtained is included in the destination URL indicated in the URL transition event. In response to the URL transition event, the collaboration server interprets the URL transition event and obtains the contents from the appropriate URL of the appropriate web server.

Thereafter, small programs (Java(R) applets) are embedded in the obtained contents by the collaboration server. The applets are required for the synchronization between multiple client computers. The collaboration server then transmits the contents in which the applets have been embedded to the client computer which generated the URL transition event. The applets embedded in the contents includes (1) an applet for notifying the collaboration server that the loading of contents has been completed, (2) an applet for synchronizing the scrolling of a browser window, and (3) an applet for permitting another client computer to display a pointer (an arrow). The technique for embedding applets in the contents is also disclosed in Japanese Unexamined Patent Publication No. 2001-229139.

The contents in which the applets is embedded are loaded into the web browser of the client computer that generated the URL transition event. When the loading of the contents has been completed, the embedded applets are automatically activated and the collaboration server is notified that the loading has been completed. Upon receiving this notification, the collaboration server permits the web browser of another synchronized client computer to generate a URL transition event.

According to this method, multiple client computers can be synchronized by embedding the applets in the obtained contents at the collaboration server. Therefore, the acquisition of the contents must constantly be performed via the collaboration server. As a result, in case that, a hyperlink is clicked on at a client computer and an arbitrary web server is accessed, the synchronization of the client computers can not be maintained. Also, a URL is input directly to a browser at a client computer, the synchronization of the client computers can not be maintained.

In conclusion, the conventional web collaboration method is effective for a solution using customized contents and a customized terminal that are designed for a collaboration, for example, an ACM/ATM in a bank. However, in a situation wherein a common personal computer (PC) is used to browse the Internet, collaboration is almost impossible.

A technique disclosed in USPN 5,944,791 by Scherpbier relates to constantly obtaining contents via a collaboration server. For a system constructed using the invention in this US patent, a server called a control site is provided. When a URL transition event occurs in the browser of a client computer called a pilot computer, the control site obtains the contents from the web server.

At the control site, the URL of a hyperlink destination included in the obtained contents is changed so that it points to the control site, and the changed contents are then transmitted to the pilot computer. As a result, when contents are to be browsed using the hyperlink, the contents are always obtained through the control site.

However, in case that, at the pilot computer, a user directly input a URL to the URL input field of the browser to generate a URL transition event, the acquisition of the contents will not be performed via the control site. Further, there are contents that include the URL of a hyperlink destination that the client computer (pilot computer) establishes by using applets, for example. For such contents, the URL of the hyperlink destination can not be changed at the control site. As a result of that, the acquisition of contents will not be performed via the control site because of the unchanged URL of the hyperlink destination.

As a general method for constantly obtaining contents from a web server via a specific server, a proxy server may be presently available. The proxy server is a server set up to accept an access request (HTTP or FTP) from a client computer located inside a firewall, and to perform actions for a client computer. (The firewall is a router or a host mounted between a local network and an external network (e.g. the Internet) in order to block attacks from outside.)

However, on each of the client computers, manual labor is required to set up for the proxy server to be employed. Furthermore, in case that multiple client computers. tried to be synchronized over the firewall, the same collaboration server can not be set up as a proxy server for each client computer. Furthermore, since for an ordinary computer only one proxy server can be designated, it is not possible to provide collaboration for each browser window by using a proxy server. And even were a proxy server to be provided for each browser window, a great deal of labor would be needed to set up for the proxy servers this would require.

### [Problems to be Solved by the Invention]

It is one objective of the present invention to provide a collaboration system that enables multiple client computers to collaborate on arbitrary contents on a network without special software.

It is a further objective of the present invention to provide a collaboration system that enables multiple client computers to collaborate on dynamic contents that are finally generate and established at the client computers.

It is a further objective of the present invention to provide a collaboration system that enables multiple client computers to collaborate on arbitrary contents on a network and to obtain the contents via a collaboration server even if a user input a URL directly and manually to the browser at a client computer.

It is a further objective of the present invention to provide a collaboration system that enables multiple client computers to collaborate on arbitrary contents on a network without additional set-up effort on the client computer.

It is a further objective of the present invention to provide a collaboration system that enables multiple client computers to collaborate in the use by each window of a browser of arbitrary contents on a network.

### [Summary of the Invention]

To achieve the above objectives of the present invention, a method called "URL redirection" is employed. Specifically, a collaboration system is provided that includes a collaboration server and a plurality of client computers, which is connected to a network including one or more contents servers which store contents, each of the client computers comprising: a browser; means for monitoring an address location transition event generated at the browser; means for canceling the address location transision event if the address location transition event is captured by the means for monitoring; means for generating, based on the address location transision event, a redirected address location which is redirected to the collaborarion server; and means for permitting the collaboration server to obtain contents by using the redirected address location.

In this collaboration system, the means for permitting includes means for permitting the browser to generate an redirected address location transition event that indicates the redirected address location as a transition destination; wherein the redirected address location transition event is not canceled by the canceling means; and wherein the collaboration server comprises: means for obtaining the contents from the contents server in response to the redirected address location transition event; and means for transmitting, to the client computers, the contents obtained by the means for obtaining.

In the collaboration system, the collaboration server further comprises means for embedding one or more programs for synchronization in contents; and wherein the contents in which the one or more programs for synchronization has been embedded are transmitted to the client computers.

In the collaboration system, the network is a TCP/IP network, the contents server is a web server, the browser means is a web browser, and the address location is a URL.

The present invention can be understood not only as the above "system (collaboration system)", but also as a "method for obtaining contents".

Further, to achieve the objectives, according to the present invention, a redirect program is provided that is executed on a client computer which is connected to a network including a plurality of servers and includes a browser, the redirect program permitting the client computer to perform the steps of: monitoring an address location transition event generated at the browser; canceling, if the address location transition event is captured at the step for monitoring, the address location transision event that indicates one of the servers is a transition destination; generating, based on the address location transition event, a redirected address location which is redirected to another server; and obtaining contents from the another server by using the redirected address location.

The present invention can be understood not only as the above "program (redirect program)", but also as a "client computer".

### [Preferred Embodiment]

The preferred embodiment of the present invention will now be described in detail while referring to the accompanying drawings. It should be noted that the present invention can be carried out by various other embodiments, and should not be limited to this embodiment. The same reference numerals are employed to denote corresponding or identical components throughout the embodiment.

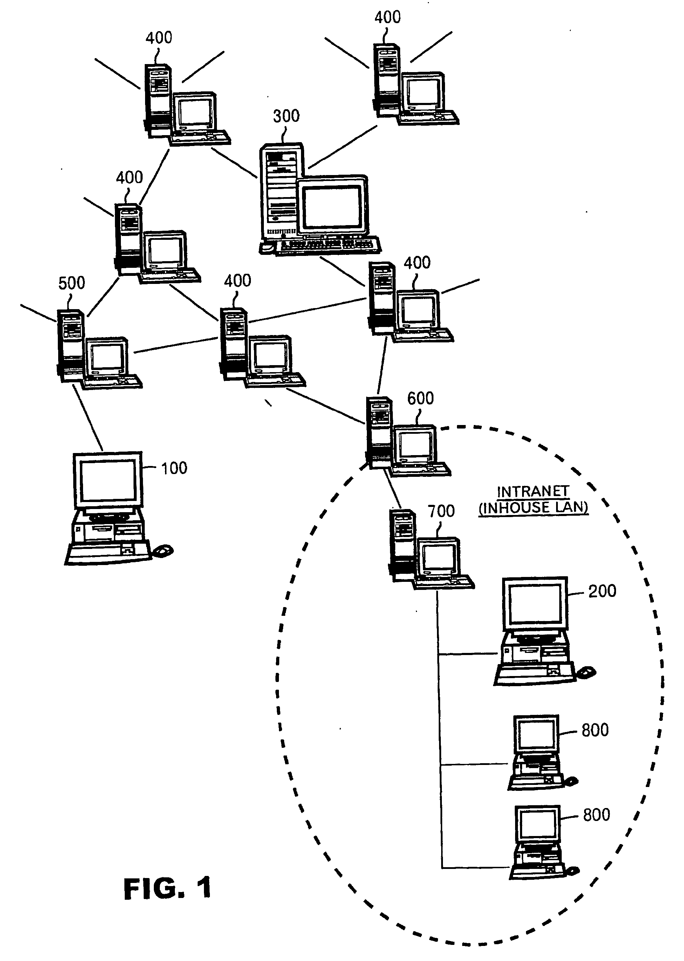

Fig. 1 is a schematic diagram showing a customer support system according to the embodiment of the present invention.

In the customer support system according to the embodiment of the present invention, customer support service is provided by the collaboration of a customer computer 100 and an agent computer 200. The customer computer 100 is operated by a customer. The agent computer 200 is operated by the person in charge of customer service (the agent) for a support service company.

The customer computer 100 is connected to the Internet via an ISP (Internet service provider) server 500 using a dialup connection. The connection from the customer computer 100 to the ISP is not limited to the dialup connection. For example, an always-on connection such as a private line, an ADSL (Asymmetric Digital Subscriber Line) or a CATV (Cable Television) may be employed.

The agent computer 200 is connected to an inhouse LAN as well as other agent computers 800. The inhouse LAN also includes a proxy server 700. The proxy server 700 receives an access request (HTTP, FTP, etc.) from the agent computer 200, and acts to obtain contents from the Internet. The inhouse LAN is connected to the Internet via a firewall 600.

Many web servers 400 are included in the Internet. In this embodiment, a collaboration server 300 is also included in the Internet.

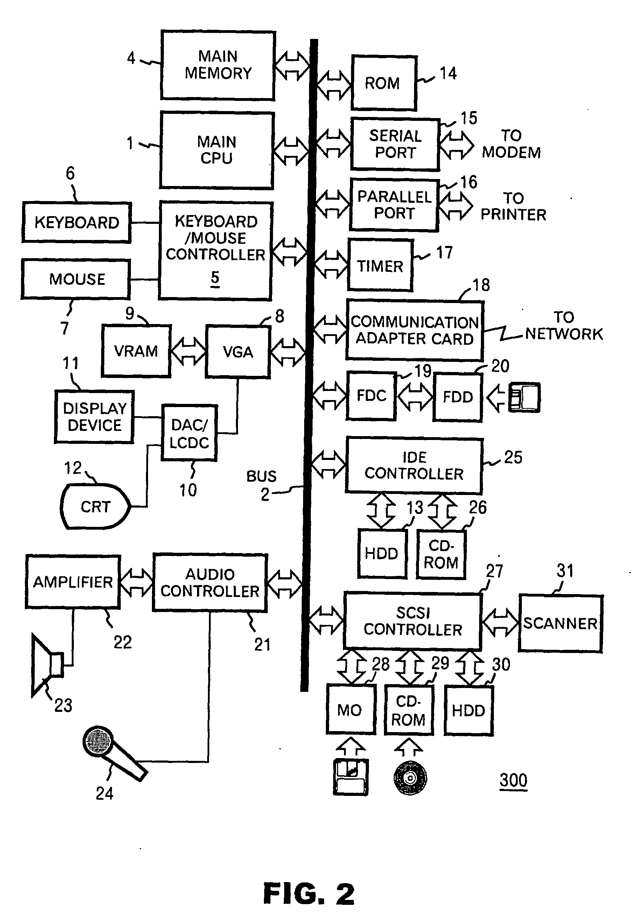

Fig. 2 is a diagram showing the typical hardware configuration of the collaboration server 300. The collaboration server 300 includes a central processing unit (CPU) 1 and a main memory 4. The CPU 1 and the main memory 4 are both connected to a hard disk drive 13, which is an auxiliary storage device, via a bus 2. Removal storage devices (external storage systems for which recording media are exchangeable) such as a flexible disk drive 20, an MO drive 28 and CD-ROM drives 26 and 29, are connected to the bus 2 via a flexible disk controller 19, an IDE controller 25 and a SCSI controller 27.

Storage media (such as flexible disks, MOs and CD-ROMs) are inserted into the removal storage devices (such as the flexible disk drive 20, the MO drive 28 and the CD-ROM drives 26 and 29). The computer program code that interacts with an operating system to- provide instructions for the CPU and that carries out the present invention can be stored on the flexible disk and the hard disk drive 13, and in the ROM 14. The computer program is executed by being loaded into the main memory 4. The computer program may be compressed or may be divided into multiple segments and stored using multiple storage media.

The collaboration server 300 further includes a pointing device 7, such as a mouse and a keyboard 6, as user interface hardware. Also, the collaboration server 300 further includes a display 12 for presenting visual data for a user. Further, the collaboration server 300 can be connected to a printer (not shown) via a parallel port 16, or can be connected to a modem (not shown) via a serial port 15. The collaboration server 300 can also be connected to a network via the serial port 15 and the modem, or via a communication adaptor (an ethernet (R) card or a token ring card) to communicate with another computer.

A loudspeaker 23 receives, via an amplifier 22, sound signals that are is produced through D/A conversion (digital/analog conversion) by an audio controller 21, and outputs sounds. Further, the audio controller 21 can perform an A/D conversion (analog/digital conversion) of sound information picked up by a microphone 24, and can convey external sound information to the system.

Through the above explanation, it would be easily understood that the collaboration server 300 in this embodiment can be implemented by any information processing apparatuses such as a main frame, a workstation, a common personal computer (PC), a laptop PC, a notebook PC, a palmtop PC or a network computer, or a combination of them. The above described components are, however, merely examples, and not all of them are always requisite components of the embodiment.

More particulary, the removable storage devices (such as the flexible disk drive 20, the MO drive 28 and the CD-ROM drives 26 and 29), the parallel port 16, the printer, the serial port 15, the modem, the combination adaptor 18, the loudspeaker 23, the audio controller 21, the amplifier 22 and the microphone 24 may not be included in the hardware configuration of the collaboration server 300 for this embodiment, because these componets are not necessary to the collaboration of the customer computer 100 and the agent computer 200.

It would be obvious to one having ordinary skill in the art that various modifications of the individual hardware components of the collaboration server 300 are possible for this embodiment. For example, the functions of the components can be distributed among multiple machines constituting a set. Obviously, these changes have been incorporated in the concept of the present invention.

As well as the collaboration server 300, the customer computer 100 and the agent computer 200 used for the embodiment can be implemented by the hardware configuration in Fig. 2. Specifically, since the customer computer 100 and the agent computer 200 need only include functions for requesing for contents and for transmitting the request and receiving a result of the request, it can be easily understood that the computers 100 and 200 can be implemented by employing a common personal computer (PC), a workstation, a notebook PC, a palmtop PC, a home electric appliance incorporating a computer, a game machine having a communication function, an information terminal such as a telephone, a facsimile machine, a portable telephone or a PHS having a communication function, or a combination of such devices. It should be noted, however, that the above described components are merely examples, and that for the present invention not all of them are requisite components.

The operating system for the customer computer 100, the agent computer 200 and the collaboration server 300 can be an OS that supports a GUI multi-window environment, such as WindowsXP(R), Windows2000 (R), WindowsNT(R), WindowsMe(R), Windows9x(R) or Windows3.x(R) by Microsoft Corp., OS/2 by International Business Machines Corp., MacOS by Apple Computer Inc., or Linux; an OS for a character-based environment, such as PC-DOS by International Business Machines Corp. or MS-DOS by Microsoft Corp.; or a real-time OS, such as OS/Open by International Business Machines Corp. or Vx Works by Wind River Systems, Inc.; or an OS incorporated in a network computer, such as Java(R)OS. In other words, the operating system is not limited to a specific operating system environment. Further, the customer computer 100, the agent computer 200 and the collaboration server 300 can also be operated in different operating system environments.

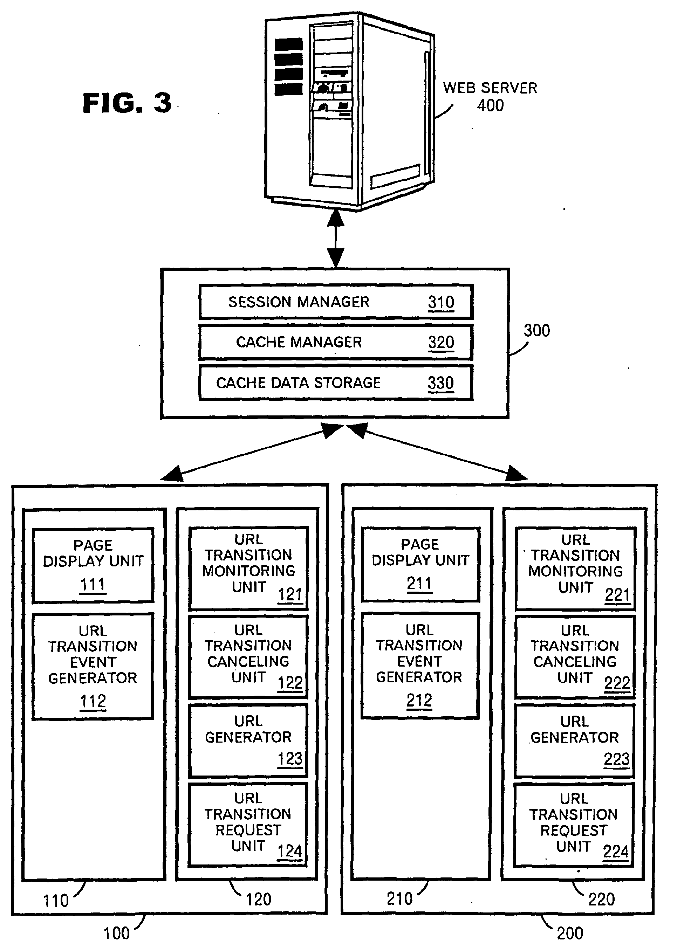

Fig. 3 is a diagram showing the system configuration of a collaboration system according to the embodiment of the present invention. The components of the system configuration in Fig. 3 are carried out by the cooperation of the hardware and the software in the computer shown in Fig. 2. The collaboration system in this embodiment includes the customer computer 100, the agent computer 200 and the collaboration server 300. The collaboration system is connected to the Internet. The collaboration system can also communicate with the web server 400 on the Internet that stores contents.

Web browsers 110 and 210 are loaded into the customer computer 100 and the agent computer 200, and are operated by manipulating user interfaces, such as the mice and the keyboards of the. customer computer 100 and the agent computer 200. The web browsers 110 and 210 respectively include page display units 111 and 211 and URL transition event generators 112 and 212.

When a URL is directly input to the URL input field of browser window, when hyperlink is clicked on, or when redirect programs 120 and 220 issue requests, the URL transition event generators 112 and 212 generate URL transition events in the web browsers 110 and 120. Thereafter, the page display units 111 and 211 display, on display devices, the contents that are obtained as a result of the URL transition events that were generated by the URL transition event generators 112 and 212.

For the web browsers 110 and 210, the Internet Explorer of Microsoft Corp. or the Netscape Navigator of Netscape Communications Corp. can be used. When the Internet Explorer is used, the redirect programs 120 and 220 are implemented as ActiveX controls. Whereas when the Netscape Navigator is used, the redirect programs 120 and 220 are implemented as plug-ins.

When the process for establishing synchronization has been performed, the redirect programs 120 and 220 will already have been loaded into the customer computer 100 and the agent computer 200. (The process for establishing sychonization will be described later in detail.) The redirect programs 120 and 220 respectively include URL transition monitoring units 121 and 221, URL transition canceling units 122 and 222, URL generators 123 and 223, and URL transition request units 124 and 224.

According to the redirect programs 120 and 220, the URL transision monitoring units 121 and 221 monitor the URL transition events generated in the web browsers 110 and 210. When the URL transition events have been captured, the URL transition canceling units 122 and 222 permit the web browsers 110 and 210 to cancel the URL transition events. The URL generators 123 and 223 employ the URL transition events to generate URLs that are redirected to the collaboration server 300. While the URL transition request units 124 and 224 forward requests to the web browsers 110 and 210 for the generation of the URL transition events that indicate, as transition destinations, the URLs obtained by the URL generators 123 and 223.

The collaboration server 300 includes a session manager 310, a cache manager 320 and a cache data storage 330. During the process performed to establish synchronization, which will be described later, upon the reception of a synchronization establishment request from the customer computer 100, the session manager 310 allocates the agent computer 200 as a collaboration partner of the customer computer 100, and establishes a collaboration session.

In accordance with the occurrence of the redirected URL transition event, the cache manager 320 obtains contents from the web server 400 on the Internet, embeds in the contents a program (applet) required for synchronization, and transmits the thus obtained contents to the customer computer 100 and the agent computer 200. The data obtained by the web server 400 and the data transmitted to the customer computer 100 and the agent computer 200 are then stored in the cache data storage 330.

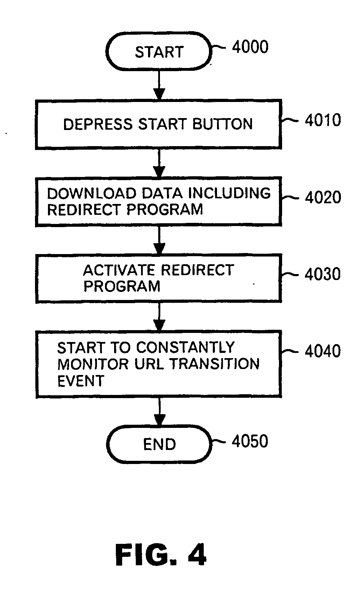

Fig. 4 is a flowchart showing the processing according to the embodiment that is employed to establish synchronization between the customer computer 100 and the agent computer 200.

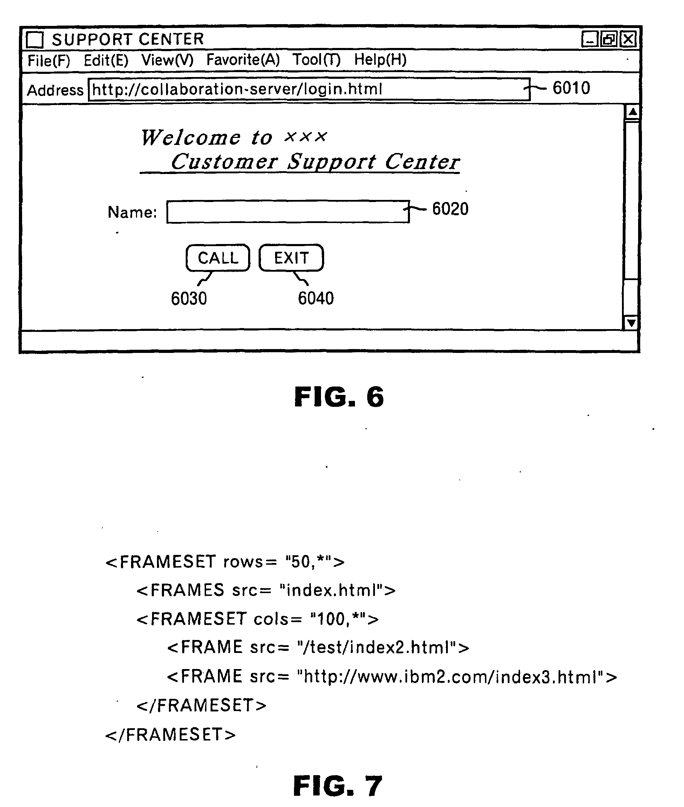

The processing starts at step 4000. Then, at step 4010, a synchronization start page for the collaboration server 300 (shown in Fig. 6) is displayed on the web browser 110 by, for example, directly inputting a predetermined URL into a URL input field 6010 for the web browser 110 of the customer computer 100. In this embodiment, it is assumed that the predetermined URL is "http://collaboration_server/login.html". The synchronization start page includes a name input field 6020 for identifying the customer computer 100, a CALL button 6030, which is a synchronization start button, and an EXIT button 6040, which is a synchronization stop button. In order to request that synchronization be established, an ID is loaded into the name input field 6020 by manipulating a user interface such as the keyboard or the mouse of the customer computer 100, and the CALL button 6030 is clicked on.

In response to clicking on the CALL button 6030 at step 4010, at step 4020, in accordance with HTTP protocol, the web browser 110 of the customer computer 100 requests that the collaboration server 300 download data, including the redirect program 120.

Upon the reception of the downloading request issued at step 4020, an agent computer is selected, at step 4030, by the session manager 310 of the collaboration server 300 to establish synchronization with the customer computer 100. For this process, the agent computer selected should be the one for which the longest time has elapsed since the first login or since the end of a preceding collaboration session. In this embodiment, it is assumed that the agent computer 200 is selected.

Further, at step 4030, data, including the redirect programs 120 and 220, are respectively downloaded to the customer computer 100 and the agent computer 200. In addition, a window ID is determined for the browser window that is requested. Furthermore, based on the window ID, a work directory path (work path) for work is determined for the collaboration session. In this embodiment, it is assumed that the allocated window ID is "0". In this embodiment, it is assumed that the allocated work directory path is "http://collaboration_server/.cm2/0/url=".

At step 4040, one browser window of the web browser 210 at the agent computer 200 is activated, following which the redirect programs 12,0 and 220 included in the downloaded data are automatically activated at the customer computer 100 and the agent computer 200. When the redirect programs 120 and 220 are activated, these programs are memory resident in the customer computer 100 and the agent computer 200, and the monitoring of a URL transition event is begun in the browser windows of the web browsers 110 and 220 to establish synchronization between the customer computer 100 and the agent computer 200. At step 4050, the processing to establish synchronization between the customer computer 100 and the agent computer 200 is terminated.

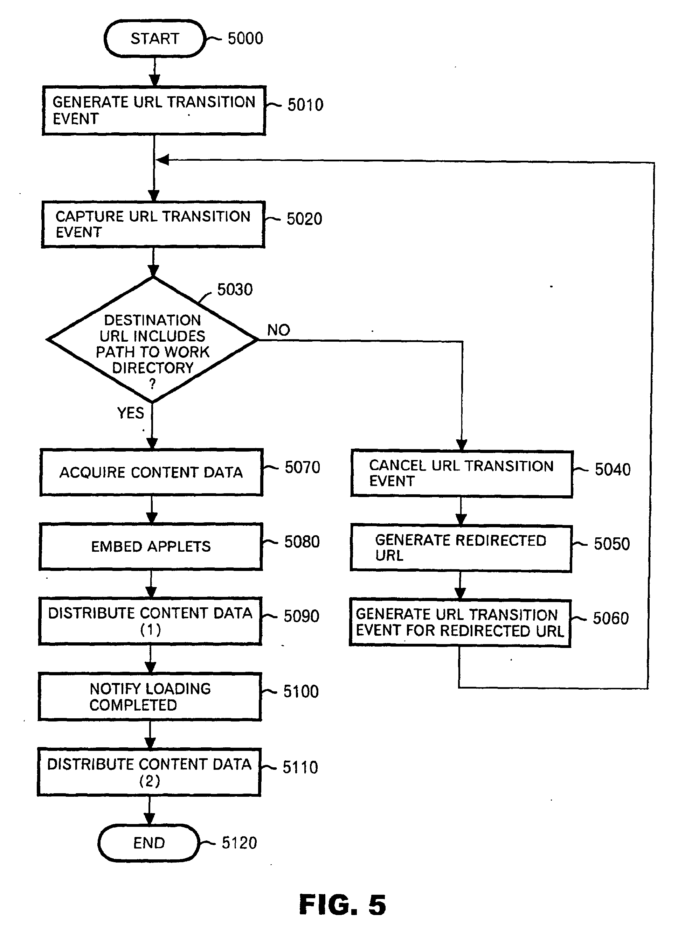

Fig. 5 is a flowchart showing the processing to be performed in case that synchronization between the customer computer 100 and the agent computer 200 has been established, and a URL transition event occurs at the web browser 110 of the customer computer 100.

The processing is initiated at step 5000. In case that, at step 5010, the user employs the mouse to double click the hyperlink of a web page that is displayed in the browser window of the web browser 110, or employs the keyboard to directly enter a URL, a URL transition request event is generated. In case that the URL transition request event occurs at step 5010, it is captured by the redirect program 120 at step 5020.

If the URL transition request event has been captured at step 5020, at step 5030 the redirect program 120 determines whether the URL for the captured URL transition request event includes the path "http://collaboration_server/.cm2/0/url=". If the URL does not include this path, i.e., if it is ascertained that the redirection, which will be described later, has not yet been performed, program control is shifted to step 5040 along an arrow path NO. Then, the redirect program 120 permits the web browser 110 to cancel the URL transition event for the pertinent URL.

Thereafter, at step 5050, the redirect program 120 employs the URL transition event generated at step 5010 to generate a URL that is redirected to the collaboration server 300. For the generation of the redirected URL, the redirect program 120 excludes "http:" from the character string of the destination URL for the URL transition event generated at step 5010, and concatenates the remaining character string and the work path determined when synchronization was established. For example, if the destination URL for the URL transition event that the web browser 110 of the customer computer 100 generates at step 5010 is "http://www.ibm.com", the redirected URL is "http://collaboration_server/.cm2/0/url=//www.ibm.com".

At step 5060, the redirect program 120 requests, to the web browser 110, the generation of a URL transition event for the redirected URL, and in response to the reception of the request, the web browser 110 generates the URL transition event for the redirected URL.

The URL transition event for which the redirected URL is indicated as the destination is also monitored by the redirect program 120, and at step 5020 the redirect program 120 captures this URL transition event. However, since the redirected URL includes the path "http://www.collaboration_server/.cm2/0/url=", program control advances to step 5070 along an arrow path YES. That is, the URL transition event for the redirected URL is not canceled.

At step 5070, the web browser 110 uses the redirected URL to request the acquisition of contents from the collaboration server 300. Upon the reception of the content acquisition request, at step 5080 the collaboration server 300 interprets the content acquisition request, and obtains the contents from the web server 400. Specifically, if the redirected URL is "http://collaboration_server/.cm2/0/url=//www.ibm.com", the collaboration server 300 determines that the contents to be acquired are available at "http://www.ibm.com", because it is understood that the work path is "http://www.collaboration_server/.cm2/0/url=". Thus, the collaboration server 300 obtains the contents from this URL "http://www.ibm.com".

At step 5080, the collaboration server 300 embeds synchronization applets in the contents obtained from the web server 400. The embedded applets includes an applet that notifies the collaboration sever 300 that the loading of the contents to the customer computer 100 has been completed.

At step 5090, the contents in which the applets are embedded is transmitted to the customer computer 100, and the thus received contents are displayed on the web browser 110 of the customer computer 100. When the display at step 5090 is completed, at step 5100 the applets embedded in the contents is activated, and the completion of the loading is reported by a transmission from the customer computer 100 to the collaboration server 300.

Upon the reception of the notification that the loading has been completed, at step 5110 the collaboration server 300 transmits to the agent computer 200 those contents that were loaded into the customer computer 100, and the web browser 210 of the agent computer 200 displays the received contents, presenting the same display as that provided on the web browser 110 of the customer computer 100. Further, after the agent computer 200 has displayed the contents, at step 5110 the agent computer 200 notifies the collaboration server 300 that the loading of the contents has been completed. This notification is then transferred from the collaboration server 300 to the customer computer 100. By this notification and data transfer, the customer computer 100, the agent computer 200 and the collaboration server 300 acknowledge that collaboration has been achieved successfully. At step 5120 the processing is terminated.

In this explanation, the URL transition event occurred when the hyperlink for a URL was double-clicked on or the URL was entered directly. However, in case that HTML (the HyperText Markup Language), a form that is widely employed for contents on the Internet, is used, providing a description for calling a URL hierarchically on a page that includes a specific URL is facilitated by employing a FRAME declaration. If this declaration is provided on a page and a URL transition event occurs, the processing contained in the flowchart shown in Fig. 5 is performed.

For hierarchically calling a URL, there are three description types that are used for the URL at the calling destination: (1) the description of a relative path branching off from a current path, (2) the description of a path originating at the root of the domain of a current server, and (3) the description of a path originating at the domain of a server. An explanation will now be given for the generation of a redirected URL according to these three descriptions.

Assume that the contents (an HTML source) of a page at "http://www.ibm.com" are those shown in Fig. 7. In this case, the FRAME declaration on the second line is (1) the description of a relative path branching off from a current path. The FRAME declaration on the fourth line is (2) the description of a path originating at the root of the domain of a current server. And the FRAME declaration on the fifth line is (3) the description of a path originating at the domain of a server. Here, since the specifications for the HTML format have been disclosed by the W3C (the World Wide Web Consortium), and since they are well known to one having ordinary skill in the art, no detailed explanation for them will be given.

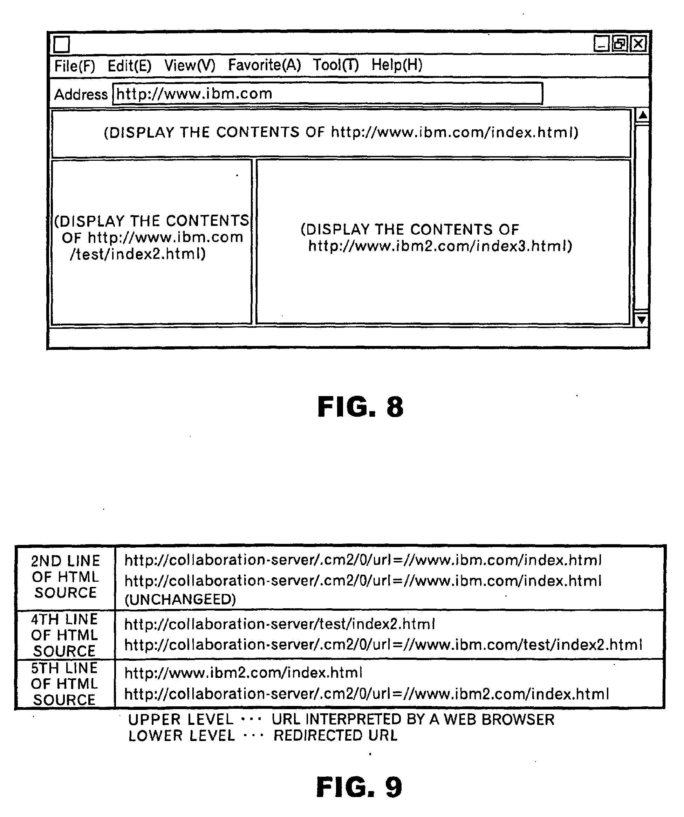

If the redirection of the URL is not performed, according to the HTML source the browser window is divided into frames as is shown in Fig. 8. The second, fourth and fifth lines of the HTML source are interpreted by the web browser 110. The contents of "http://www.ibm.com/index.html" are displayed in the upper frame. The contents of "http://www.ibm.com/test/index2.htm1" are displayed in the left lower frame. The contents of "http://www.ibm2.com/index3.html" are displayed in the lower right frame.

When "http://www.ibm.com" is redirected to "http://collaboration_server/.cm2/0/url=//www.ibm.com" by the redirect program 120, the web browser 110 interprets this to mean that the second, fourth and fifth lines of the HTML source are upper URLs shown as individual entries in the table in Fig. 9.

In this case, the change by the redirect program 120 is unnecessary for (1) the description of a relative path branching off from a current path. For (3) the description of a path originating at the domain of a server, the redirect program 120 need only perform the change described above. However, for (2) the description of a path originating at the root of the domain of a current server, a special change by the redirect program 120 is required. That is, for (2), the character string "http://www.collaboration_server" must be replaced by the redirect program 120 with the work path "http://collaboration_server/.cm2/0/url=". The thus redirected URLs are shown in the lower levels of the individual entries in the table in Fig. 9.

The embodiment is merely an example used to provide an explanation for the invention and does not cover all possible embodiments, and the present invention is not limited to the mode disclosed in this embodiment. According to this invention, many other modifications and variations are possible. Further, it should be noted that the scope of the invention is not limited to the detailed description of the invention, and is defined by the claims of the invention.

In this embodiment, the present invention has been applied for the collaboration between a customer and an agent in the customer support system. However, it would be obvious to one having ordinary skill in the art that the present invention can also be applied for synchronization for a one-to-multiple telephone conference, or a multiple-to-multiple electronic telephone conference. Also, the applets to be embedded in the contents may differ depending on the contents to be transmitted to a customer computer and the contents to be transmitted to an agent computer. Further, in this embodiment, an Internet/Intranet (inhouse LAN) has been employed. However, the present invention can of course also be applied for a network constructed according to a protocol other than the protocol used for the Internet. The production and the usage of one embodiment of the present invention has been thoroughly explained by using the specification, the examples and the data described above, but many other embodiments of the invention can be carried out without departing from the spirit and scope of the invention.

According to the present invention, a collaboration on arbitrary contents can be established on a network without special collaboration software having to be introduced into a client computer and without a special setup being required. Further, according to the invention, since the client computer controls redirection, a collaboration can be established for processing dynamic contents that have finally been designated by the client computer. Furthermore, according to the invention, for each browser window, a collaboration can be established on arbitrary contents on a network.

### Brief Description of the Drawings:

Fig. 1 is a diagram showing an overview of a collaboration system according to one embodiment of the present invention.

Fig. 2 is a block diagram showing an example hardware configuration for a customer computer, an agent computer and a collaboration server according to the embodiment of the invention.

Fig. 3 is a functional block diagram showing the system configuration of the collaboration system according to the embodiment of the invention.

Fig. 4 is a flowchart showing the processing performed according to the embodiment to establish synchronization between a customer computer and an agent computer.

Fig. 5 is a flowchart showing the processing to be performed in case that synchronization has been established and a URL transition event occurs according to the embodiment.

Fig. 6 is a diagram showing a synchronization start page for a collaboration server according to the embodiment of the invention.

Fig. 7 is a diagram showing an HTML source using a FRAME declaration according to the embodiment of the invention.

Fig. 8 is a diagram showing an example when the HTML source in Fig. 7 is displayed on a web browser.

Fig. 9 is a diagram for explaining URL interpretation and URL redirection performed for the HTML source in Fig. 7 by the web browser.

## Claims

1. A collaboration system including a collaboration server and a plurality of client computers, which is connected to a network including one or more contents servers which store contents, each of said client computers comprising:
a browser;
means for monitoring an address location transition event generated at said browser;
means for canceling said address location transision event if said address location transition event is captured by said means for monitoring;
means for generating, based on said address location transision event, a redirected address location which is redirected to said collaborarion server; and
means for permitting said collaboration server to obtain contents by using said redirected address location.

2. The collaboration system according to claim 1, wherein said means for permitting includes means for permitting said browser to generate an redirected address location transition event that indicates said redirected address location as a transition destination;
wherein said redirected address location transition event is not canceled by said canceling means; and
wherein said collaboration server comprises: means for obtaining the contents from said contents server in response to said redirected address location transition event; and means for transmitting, to said client computers, the contents obtained by said means for obtaining.

3. The collaboration system according to claim 2, wherein said collaboration server further comprises means for embedding one or more program for synchronization in contents; and wherein said contents in which said one or more program for synchronization has been embedded are transmitted to said client computers.

4. The collaboration system according to claim 1, wherein said network is a TCP/IP network, said contents server is a web server, said browser means is a web browser, and said address location is a URL.

5. In a system including a collaboration server and a plurality of client computers, which is connected to a network including one or more contents servers which store contents, said client computer including a browser, a method for obtaining contents comprising the steps of:
monitoring an address location transition event generated at said browser;
canceling said address location transision event if said address location transition event is captured at said step for monitoring;
generating, based on said address location transision event, a redirected address location which is redirected to said collaborarion server; and
permitting said collaboration server to obtain contents by using said redirected address location.

6. The method according to claim 5, wherein said step for permitting includes step for permitting said browser to generate an redirected address location transition event that indicates said redirected address location as a transition destination;
wherein said redirected address location transition event is not canceled at said step for canceling; and
wherein the method further comprising the steps of: obtaining, by said collaboration server, the contents from said contents server in response to said redirected address location transition event; and transmitting, by said collaboration server, to said client computers, the contents obtained at said step for obtaining.

7. The method according to claim 6 further comprising the step of embedding, said collaboration server, one or more program for synchronization in contents; and wherein said contents in which said one or more program for synchronization has been embedded are transmitted to said client computers.

8. The method according to claim 5, wherein said network is a TCP/IP network, said contents server is a web server, said browser is a web browser, and said address location is a URL.

9. A redirect program executed on a client computer which is connected to a network including a plurality of servers and includes a browser, said redirect program permitting said client computer to perform the steps of:
monitoring an address location transition event generated at said browser;
canceling, if said address location transition event is captured at said step for monitoring, said address location transision event that indicates one of said servers is a transition destination;
generating, based on said address location transition event, a redirected address location which is redirected to another server; and
obtaining contents from said another server by using said redirected address location.

10. A client computer connected to a network including a plurality of servers, comprising:
a browser,
means for monitoring an address location transition event generated at said browser;
means for canceling, if said address location transition event is captured at said step for monitoring, said address location transision event that indicates one of said servers is a transition destination;
means for generating, based on said address location transition event, a redirected address location which is redirected to another server; and
means for obtaining contents from said another server by using said redirected address location.
